# FASCICULE DE BREVET EUROPEEN

(11) **EP 0 893 481 B1**
(45) Date de publication et mention de la délivrance du brevet: **22.09.2004**
(21) Numéro de dépôt: 98401846.5
(22) Date de dépôt: 21.07.1998
(51) Int. Cl.: C08L 101/00, B32B 27/20

(54) **Composition thermoplastique transparente contenant des particules de polyamide**
Transparente thermoplastische Zusammensetzung enthaltend Polyamidteilchen
Transparent thermoplastic composition containing polyamide particles

(30) Priorité: 25.07.1997 FR 9709498
(43) Date de publication de la demande: 27.01.1999
(73) Titulaire: Atofina, 92800 Puteaux (FR)
(72) Inventeur: Bruneau, Jean-Michel, 27140 Gisors (FR); Perraud, Eric, 95800 Courdimanche (FR); Magne, Jacques, 27140 Gisors (FR); Marcarian, Xavier, 64110 Jurançon (FR)
(74) Mandataire: Granet, Pierre

(56) Documents cités:
- JP-A- 61 209 154
- US-A- 5 340 884
- PATENT ABSTRACTS OF JAPAN vol. 014, no. 137 (C-0702), 15 mars 1990 & JP 02 011640 A (TORAY IND INC), 16 janvier 1990

## Description

L'invention concerne une composition en matière thermoplastique transparente comprenant des particules de polyamide, utilisable pour former des articles façonnés, en particulier des plaques jouant le rôle de guide de lumière et diffusant la lumière. Ces plaques sont particulièrement utilisables pour des systèmes d'affichage lumineux.

Des systèmes d'affichage lumineux sont connus et comprennent généralement, monté dans un encadrement approprié, un ensemble comprenant une plaque ou panneau en matière plastique transparente contenant des particules de matière pouvant diffuser la lumière.

La source de lumière, généralement des tubes fluorescents, peut se trouver au voisinage d'une face du panneau en matière thermoplastique et on observe, par la face opposée, la lumière transmise directement et celle diffusée par les particules contenues dans le panneau. Dans ce cas, le panneau en matière thermoplastique contient une grande quantité de particules diffusantes pour le rendre suffisamment opaque pour masquer la source de lumière. Le panneau est intégré dans un caisson contenant les tubes fluorescents. Ces tubes doivent être suffisamment nombreux afin d'assurer une bonne répartition de l'intensité lumineuse. Ce caisson a l'inconvénient d'être épais et ce dispositif consomme beaucoup d'énergie.

La source de lumière peut aussi se trouver au voisinage d'un ou des bords du panneau de manière à éclairer celui-ci par la tranche (ou chant). Le panneau fonctionne alors en guide de lumière. Celle-ci est donc réfléchie et diffusée par les particules diffusantes contenues dans le panneau et une partie de la lumière diffusée est observée à travers une ou deux face(s) du panneau. Si le panneau contient une grande quantité de particules diffusantes, le chemin optique suivi par la lumière est court et une partie de la surface ne sera pas ou mal éclairée.

Si le panneau contient peu de particules diffusantes, l'intensité de la lumière diffusée est faible.

L'intensité lumineuse diffusée diminue en fonction de l'éloignement de la source de lumière.

On cherche donc des compositions en matière thermoplastique transparente moulable en articles façonnés, en particulier sous forme de plaques utilisables, par exemple, comme panneaux de dispositifs d'affichage lumineux qui, tout en contenant un minimum de particules diffusantes, permettent une intensité lumineuse diffusée maximale et uniforme sur toute la surface de l'article façonné.

La composition thermoplastique selon l'invention, pour article façonné, diffusant la lumière, comprend une matière thermoplastique transparente et par rapport à la composition totale, de 20 ppm à 1000 ppm de particules de polyamide d'une dimension moyenne de 0,4 µm à 200 µm.

La matière thermoplastique peut être, par exemple, un (co)polymère (méth)acrylique, du polycarbonate, du polystyrène, du polytéréphtalate d'éthylène, des copolyesters constitués par du polytéréphtalate d'éthylène modifié par un glycol tel que le diéthylène glycol, le butanediol, l'hexanediol et le 1,4-cyclohexane diméthanol ou des mélanges du polytéréphtalate d'éthylène et de ces copolyesters.

Le (co)polymère thermoplastique (méth)acrylique peut être, en particulier, constitué par un homopolymère de méthacrylate d'alkyle ou par un copolymère dérivé de méthacrylate d'alkyle et d'au moins un monomère à insaturation(s) éthylénique(s) copolymérisable avec le méthacrylate d'alkyle.

Comme méthacrylate d'alkyle, on peut citer notamment les composés dans lesquels le groupe alkyle a de 1 à 8 atomes de carbone, par exemple, le méthacrylate de méthyle, d'éthyle, de propyle, d'isopropyle et de butyle. Un monomère particulièrement préféré est le méthacrylate de méthyle.

Le (co)polymère thermoplastique (méth)acrylique comprend de préférence de 70 à 100 % en poids de monomère principal, le méthacrylate d'alkyle, et de 0 à 30 % en poids de monomère(s) à insaturation(s) éthylénique(s) copolymérisable(s) avec le méthacrylate d'alkyle. Ce(s) monomère(s) à insaturation(s) éthylénique(s) sont choisi(s), par exemple, parmi les acrylates d'alkyle en C₁-C₈, le styrène, les styrènes substitués, l'acrylonitrile, le méthacrylonitrile, les méthacrylates d'alkyle en C₁-C₈ différent du monomère principal, les acrylates et méthacrylates d'hydroxyalkyle, les acrylates et méthacrylates d'alcoxyalkyle ou d'aryloxyalkyle dans lesquels le groupe alkyle a de 1 à 4 atomes de carbone, l'acrylamide, le méthacrylamide, l'acide acrylique, l'acide méthacrylique, les maléimides et les diméthacrylates d'alkylène glycol, dans lesquels le groupe alkylène a de 1 à 4 atomes de carbone.

Les (co)polymères (méth)acryliques peuvent être obtenus par tout procédé connu, par exemple par polymérisation en suspension ou en masse.

La composition selon l'invention comprend des particules de polyamide qui ont avantageusement une dimension moyenne comprise entre 0,4 et 100 µm, de préférence 0,4 à 50 µm. Des particules de dimension moyenne de 1 à 15 µm sont particulièrement appropriées.

De préférence, les particules de polyamide ont une répartition granulométrique étroite, c'est-à-dire que plus de 90 % environ ont une dimension comprise entre 2,5 et 10 µm.

La composition contient, en particulier, de 100 à 200 ppm de particules de polyamide.

Comme polyamides, on peut utiliser ceux obtenus à partir de lactames, comme par exemple, le ε-caprolactame, l'oenantholactame, l'undécanolactame, le lauryllactame, ou à partir d'aminoacides dont la chaîne carbonée possède un nombre d'atomes de carbone compris entre 4 et 20 tels que les acides aminocaproïque, amino-7-heptanoïque, amino-11-undécanoïque, amino-12-dodécanoïque. On peut aussi utiliser les produits de condensation de diamines comme l'hexaméthylènediamine, la dodécaméthylènediamine, la métaxylylènediamine, le bis-(p-aminocyclohexyl)méthane, la triméthylhexaméthylènediamine, etc..... avec des acides dicarboxyliques tels que les acides isophtalique, téréphtalique, adipique, subérique, azélaïque, sébacique, dodécanedioïque, dodécanedicarboxylique; on peut citer, par exemple, les polyamides 6-6 ; 6-9 ; 6-12 ; 9-6 qui sont des produits de condensation de l'hexaméthylènediamine avec l'acide adipique, l'acide azélaïque, l'acide sébacique, l'acide 1,12-dodécanedioïque ou bien le produit de réaction de la nonaméthylènediamine avec l'acide adipique.

On peut aussi utiliser des mélanges de tous ces monomères ce qui conduit à des copolyamides.

Parmi ces polyamides, on cite tout particulièrement le polyamide 6 obtenu par polymérisation de ε-caprolactame, le polyamide 11 obtenu par polycondensation de l'acide amino-11-undécanoïque, le polyamide 12 obtenu par polycondensation de l'acide amino-12-dodécanoïque ou le dodécanolactame.

Par "polyamide", on entend aussi des polyétheramides et des polyétheres-teramides.

Les polyamides obtenus sous forme de granulés peuvent être transformés en poudre de dimension appropriée par des techniques connues, par exemple, par broyage des granulés, dissolution à chaud dans des solvants ou précipitation par refroidissement. Il est aussi possible d'obtenir ces polyamides directement sous forme de poudre par polymérisation anionique du ou des monomères comme il est décrit, par exemple, dans les brevets EP-B1-192515 ou EP-B1-303530. La poudre de polyamide obtenue par le procédé décrit dans EP-B1-303530, particulièrement utilisable dans l'invention, est formée de particules élémentaires poreuses de forme sensiblement sphéroïdale, de diamètre moyen compris entre 1 et 20 µm, particulièrement entre 2 et 10 µm.

Des polyamides particulièrement appropriés sont ceux vendus par Elf Atochem S.A. sous les dénominations commerciales Rilsan® et Orgasol®.

La composition selon l'invention peut contenir des additifs usuels, tels que colorants, charges.

Elle peut être obtenue par mélange des (co)polymères (méth)acryliques et polyamides dans tout dispositif approprié, par exemple dans un mélangeur du type Brabender, une extrudeuse monovis ou double vis etc ...

Les articles façonnés diffusant la lumière que l'on peut fabriquer à partir de la composition thermoplastique décrite précédemment, peuvent être obtenus par divers procédés connus de moulage, en particulier par extrusion, injection, compression. On obtient alors des produits en plaques ou des produits moulés de formes variées.

Les articles façonnés peuvent aussi être obtenus directement sous forme de plaques par polymérisation en masse d'un mélange de monomères (méth)acryliques et éventuellement de leur prépolymère, en présence du polyamide et des autres éventuels additifs, dans un moule formé par deux plaques en verre (procédé par coulée).

Pour cette polymérisation en masse, on peut utiliser tout initiateur de radicaux libres connus, par exemple des composés diazoïques comme l'azo-bis-isobutyronitrile (AIBN), des peroxydes, comme le peroxyde de benzoyle. La polymérisation a lieu généralement en présence d'une agent de transfert de chaîne tel que des terpènes monocycliques diinsaturés et des terpènes bicycliques monoinsaturés tels que le terpinolène, des mercaptans comme le tertio-dodécyl-mercaptan.

On peut aussi ajouter des agents favorisant le démoulage des plaques, par exemple l'acide stéarique, le dioctylsulfosuccinate de sodium.

Les articles façonnés selon l'invention et, en particulier, des plaques, peuvent être aussi constitués d'un matériau thermoplastique transparent, tel que ceux mentionnés précédemment, comprenant une concentration en particules de polyamide qui varie dans toute l'épaisseur de l'article, la plus forte concentration se trouvant dans une zone proche de la surface de diffusion. Cette différence de concentration dans l'épaisseur de l'article peut être progressive en se présentant sous forme de gradient de concentration. Ce mode de réalisation permet d'augmenter la transmission de la lumière dans la zone de l'article à moindre concentration en particules de polyamide, et, par suite, une plus grande uniformité de l'intensité de lumière diffusée sur toute la surface de l'article, en particulier dans des zones éloignées de la source de lumière.

Les plaques, obtenues à partir des compositions selon l'invention, sont utiles notamment pour fabriquer des panneaux pour systèmes d'affichage lumineux publicitaires. Dans le cas où les panneaux sont éclairés par la tranche, ils ont avantageusement une épaisseur d'au moins 6 mm environ. Des panneaux diffusant d'une épaisseur inférieure à environ 6 mm restent cependant utiles pour des applications particulières. Lorsque les panneaux sont éclairés par une face, leur épaisseur minimale peut être plus grande, par exemple de 8 à 15 mm.

Il est aussi possible de fabriquer des panneaux pour système d'affichage lumineux, qui comprennent, par exemple, un support en un matériau thermoplastique transparent, comme du polyméthacrylate de méthyle, du polystyrène, polycarbonate, du polytéréphtalate d'éthylène ou des copolyesters constitués par du polytéréphtalate d'éthylène modifié par un glycol, et une couche diffusante formée de la composition thermoplastique diffusante décrite précédemment. Ce produit peut être obtenu par tout procédé approprié, par exemple par co-extrusion, plaxage.

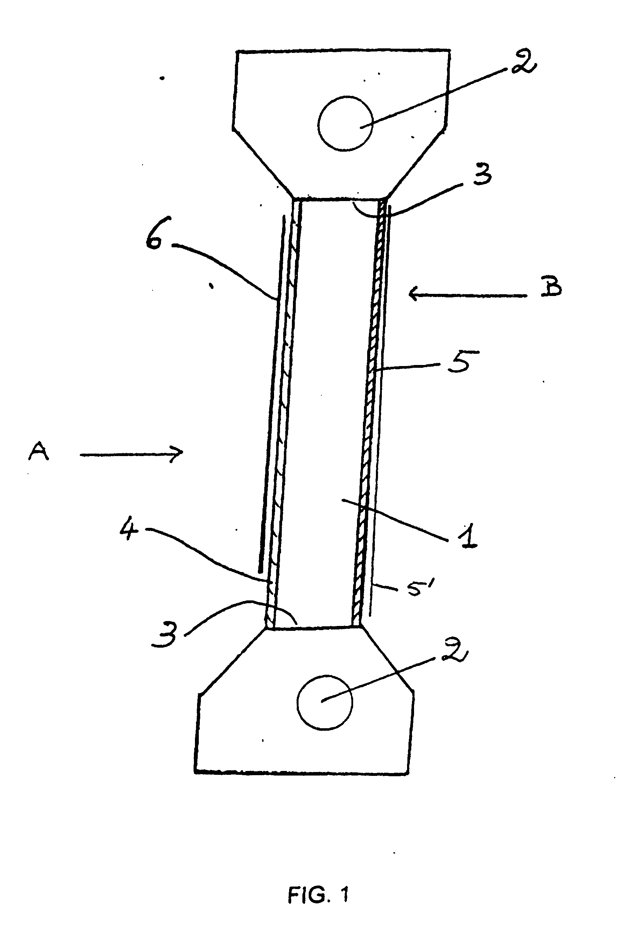

Un mode de réalisation d'un système d'affichage lumineux comprenant un panneau constitué par une plaque obtenue à partir d'une composition thermoplastique selon l'invention est schématisé à la figure 1.

Le panneau (1) est associé à au moins un moyen formant la source lumineuse (2), tel qu'un tube fluorescent, monté pour éclairer le panneau par sa tranche.

Pour améliorer l'uniformité de la lumière diffusée, on place deux sources de lumière (2) suivant deux côtés (chants) opposés du panneau. Avantageusement, les chants (3) faisant face aux sources de lumière, sont préalablement polis pour éviter la réflexion de la lumière émise par la source.

Les chants ne faisant pas face aux sources de lumière (non représentés à la figure 1) portent une couche réfléchissant la lumière, par exemple un film métallique tel qu'un film en aluminium porté, par exemple, par un support adhésif tel que le produit Scotch Brand type 850® de 3M, ou bien une couche métallique déposée, par exemple, par pulvérisation cathodique, éventuellement après prétraitement de la surface, comme décrit dans le document EP-A-0 650772.

La face (A) du panneau par laquelle on observe la lumière diffusée peut porter un film ou une plaque diffusant la lumière (4) ayant un coefficient de transmission qui dépend de l'effet souhaité pour améliorer encore plus l'uniformité de la lumière diffusée. Le coefficient de transmission de ce film ou de cette plaque est, de préférence supérieur ou égal à environ 50 %.

Ce film, ou cette plaque, peut être constitué(e) par toute matière appropriée ; par exemple, ce peut être un polymère comme le polyméthacrylate de méthyle traité pour obtenir la transmission souhaitée (tel que l'Altuglas® Ref. 101.27019 vendu par ATOHAAS Europe) ou même un support de papier présentant une transmission lumineuse adéquate ou bien c'est l'affiche publicitaire à éclairer elle-même.

Pour obtenir une meilleure reflexion de la lumière, avant diffusion, la face (B) opposée à celle par laquelle on observe la lumière diffusée, porte avantageusement un film ou une plaque opaque (5) formée par tout matériau approprié, par exemple par du polyméthacrylate de méthyle traité pour avoir une faible transmission (tel que l'Altuglas® Ref. 101.47005), un polymère de chlorure de vinyle blanc, un polyester blanc ou du polyéthylène.

Ces films ou plaques diffusantes (4) ou opaques (5) peuvent avoir une épaisseur variant suivant l'utilisation souhaitée. Ces différents éléments décrits sont assemblés sans être collés ou bien ils peuvent adhérer au panneau par tout moyen approprié.

Selon un mode de réalisation avantageux, permettant d'améliorer l'intensité de la lumière diffusée, les films (4) et/ou (5) placés respectivement sur les faces (A) et (B) se présentent sous forme de bandes adhésives parallèles d'une largeur de quelques millimètres à quelques centimètres, par exemple de l'ordre de 0,5 à 20 mm, espacés régulièrement ou non les unes des autres d'une distance de quelques millimètres à quelques centimètres (par exemple 0,5 à 20 mm). La distance séparant ces bandes peut être égale, supérieure ou inférieure à la largeur des bandes. En particulier, la distance séparant ces bandes peut être plus étroite au fur et à mesure que l'on s'éloigne de la source lumineuse. Dans le cas où la source lumineuse est constituée par des tubes fluorescents, les bandes adhésives sont parallèles entre elles et aux tubes.

De préférence, seule la face (B) porte un film (5) sous forme de bandes parallèles. Ces bandes adhèrent à la surface du panneau par tout moyen approprié.

Dans le cas où le film (5) sur la face (B) est sous forme de bandes, un film ou une plaque (5') est placé(e) sur ce film (5) pour éviter les pertes de lumière.

Sur la figure 1, l'élément 6 représente, à titre d'exemple, un possible support d'information.

Les exemples suivants, non limitatifs, illustrent l'invention. Dans ces exemples, la matière thermoplastique moulable est constituée par du polyméthacrylate de méthyle (PMMA). On prépare des panneaux utiles dans des dispositifs d'affichage lumineux comme indiqué aux exemples.

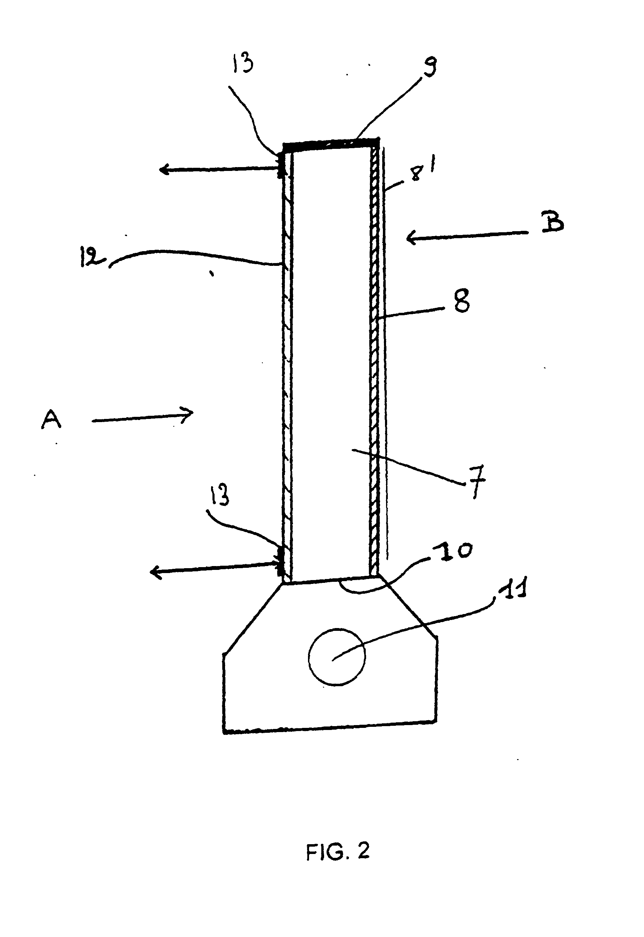

On mesure l'intensité de lumière diffusée en utilisant un montage tel que représenté à la Figure 2.

L'évaluation de l'intensité lumineuse diffusée est faite avec un luxmètre LAP dont la cellule (13) est placée sur la surface du panneau à une distance de 5 cm et de 50 cm de la source lumineuse (11). Cette évaluation permet de déterminer l'uniformité de l'intensité lumineuse sur l'ensemble de la surface du panneau.

### EXEMPLES 1 ET 2

On prépare dans chacun des exemples un panneau diffusant la lumière par le procédé de polymérisation en masse. On prépare un prépolymère de méthacrylate de méthyle en ajoutant 20 ppm en poids de catalyseur 2,2-azobis-isobutyronitrile, au monomère méthacrylate de méthyle. Le mélange est chauffé à 90°C jusqu'à l'obtention d'un taux de conversion de l'ordre de 7 %.

Ce prépolymère est refroidi, puis on lui ajoute la quantité (250 ppm) du même catalyseur nécessaire à la polymérisation de tout le monomère, 55 ppm d'agent de transfert de chaîne (terpinolène) et 150 ppm de poudre de polyamide ORGASOL 2001® (polyamide 12) pour l'exemple 1 et ORGASOL 3502® (polyamide 6,12) pour l'exemple 2, vendus par Elf Atochem S.A., de dimension moyenne 5 µm et 15 µm respectivement. On ajoute aussi 100 ppm d'agent démoulant classique, le dioctyle sulfosuccinate de sodium.

Le moule est formé par deux plaques en verre de dimension (1000 x 1000 x 8 mm) séparées à leur périphérie par un joint en polychlorure de vinyle (PVC) souple dont le diamètre détermine l'épaisseur de la plaque finale (8 mm). Les deux extrémités du joint sont maintenues écartées pour permettre l'introduction de la composition polymérisable. Ces plaques en verre sont maintenues avec des pinces métalliques.

La composition est mise sous vide pendant 30 minutes pour éliminer l'air, puis on l'introduit dans le moule à l'aide d'un entonnoir placé entre les deux extrémités du joint en PVC, puis on ferme le moule en mettant en contact ces deux extrémités.

On introduit le moule dans une étuve ventilée pour polymériser le méthacrylate de méthyle. Le cycle de température consiste à chauffer le moule à 55°C pendant 600 minutes, puis à 120°C pendant 2 heures afin d'assurer une conversion maximale d'au moins 99 %.

On obtient une plaque d'une épaisseur de 8 mm.

Cette plaque est testée comme indiquée précédemment, comme panneau 7 dans un montage tel que représenté à la figure 2.

La face (A) du panneau porte une plaque diffusante (12) de transmission 50 % d'une épaisseur de 3 mm en Altuglas® blanc, opale, Ref. 101.27019. Cette plaque simule une affiche publicitaire à éclairer par la lumière diffusée.

Le panneau (7) de PMMA porte sur la face (B) un film opaque (8) de 150 µm d'épaisseur et constitué par du polychlorure de vinyle blanc.

Le chant (9), qui ne fait pas face à la source lumineuse, porte un film réfléchissant en aluminium. Le chant (10) du panneau faisant face à la source lumineuse (11) est poli. La source lumineuse (11), placée à 1 mm de la surface de chant (10), est constituée par un tube fluorescent Mazda Fluor Symphonie Harmonia 950®(36W pour un flux lumineux de 2850 lumens).

Avec le polyamide Orgasol 2001 (exemple 1): à 5 cm de la source lumineuse, l'intensité lumineuse mesurée par le luxmètre est de 180 lux. A 50 cm de la source lumineuse, l'intensité lumineuse est de 170 lux.

Avec le polyamide Orgasol 3502 (exemple 2) : à 5 cm, l'intensité lumineuse est de 160 lux; à 50 cm, elle est de 150 lux.

On peut noter que l'intensité lumineuse varie peu entre la partie du panneau située près de la source lumineuse et celle située à l'extrémité du panneau, ce qui signifie que l'intensité lumineuse est uniforme sur toute la surface du panneau.

On remarque aussi que les panneaux selon l'invention présentent une nuance blanche légèrement bleutée agréable esthétiquement. Cette nuance est évaluée par les mesures effectuées avec le spectrocolorimètre à sphère d'intégration Colorquest®, modèle 1200M50 de Hunterlab qui permet de déterminer les trois paramètres L*, a* et b* définis par la CIE (Comité International de l'Eclairage). Ils permettent de définir une couleur par rapport à des étalons blanc, gris et noir. En particulier, pour le produit contenant les particules de polyamide Orgasol 2001, les 3 paramètres précédents, mesurés sur la lumière diffusée par la panneau en condition d'usage, sont, respectivement, 2,2, + 1,4 et -12.

### EXEMPLES 3a à 3d

On utilise une plaque de PMMA comme préparée aux exemples 1 et 2. Elle contient 150 ppm de polyamide ORGASOL 2001® sous forme de poudre de dimension moyenne de 5 µm. Cette plaque a une dimension de 300 x 420 x 8 mm. On l'utilise comme panneau dans un dispositif d'affichage lumineux tel que représenté à la figure 2. La source de lumière (11) est constituée par un tube fluorescent FM de la société OSRAM ayant un diamètre de 7 mm et une longueur de 320 mm. La puissance consommée est de 8 watts pour un flux lumineux de 500 lumens. Le tube est placé à 1 mm de la surface du chant (10), le long d'un grand côté. Les chants non éclairés sont recouverts d'un ruban adhésif réfléchissant. Tous les chants sont polis.

La face (A) du panneau porte une plaque diffusante (12) blanc opale en ALTUGLAS® Réf. 101-27019 d'une épaisseur de 3 mm, qui sert à simuler une affiche publicitaire.

La face (B), opposée à celle par laquelle on observe la lumière diffusée, porte un revêtement constitué d'un film adhésif (8) en polychlorure de vinyle opaque blanc d'une épaisseur de 80 µm, vendu sous la dénomination Scotchcal Electrocut blanc par la société 3M (transmission = 12 %). Ce film se présente sous forme continue ou sous forme de bandes parallèles entre elles.

La face (B) du panneau, munie du film adhésif sous forme continue ou sous forme de bandes parallèles porte, en outre, une plaque (8') blanc opaque d'ALTUGLAS ® Réf. 101-47005, d'une épaisseur de 3 mm.

L'intensité lumineuse diffusée par la face (A) est mesurée, comme indiqué précédemment, avec un luxmètre LAP dont la cellule est placée sur la surface du panneau à différentes distances de la source lumineuse.

Le tableau 1 donne les intensités lumineuses diffusées en fonction de la distance à la source lumineuse, observées avec plusieurs panneaux selon l'invention portant ou non un film adhésif blanc. Le film blanc est sous forme continue ou sous forme de bandes parallèles entre elles et au tube fluorescent. Les panneaux sont les suivants :
panneau (a) = panneau sans film adhésif,
panneau (b) = panneau portant un film adhésif continu,
panneau (c) = panneau portant le film adhésif sous forme de bandes parallèles d'une largeur de 2 mm et espacées d'une distance de 3 mm,
panneau (d) = panneau portant le film adhésif se présentant sous la forme de bandes parallèles entre elles, déposées de la manière suivante :
- sur une distance de 8 cm à partir de la source lumineuse : bandes adhésives de 2 mm de largeur et espacées de 8 mm.
- sur une distance allant de 8 cm à 17 cm de la source lumineuse : bandes de 2 mm de largeur espacées d'une distance de 3 mm.
- sur une distance de 17 cm à 30 cm de la source lumineuse : film adhésif en continu.

**TABLEAU 1**

| **Distance à la source (cm)** | **Plaque (a)** | **Plaque (b)** | **Plaque (c)** | **Plaque (d)** |
|---|---|---|---|---|
| 0 | 400 | 1600 | 700 | 550 |
| 2,5 | 170 | 1100 | 630 | 500 |
| 5 | 155 | 800 | 480 | 420 |
| 7,5 | 140 | 600 | 400 | 360 |
| 10 | 130 | 440 | 340 | 420 |
| 12,5 | 128 | 380 | 290 | 380 |
| 15 | 125 | 340 | 250 | 330 |
| 17,5 | 125 | 320 | 240 | 400 |
| 20 | 125 | 290 | 220 | 380 |
| 25 | 125 | 260 | 190 | 230 |
| 30 | 125 | 240 | 190 | 190 |

On peut noter que le panneau (b) (film continu) est plus lumineux que le panneau (a) (sans film adhésif), mais l'intensité de la lumière diffusée n'est pas très homogène.

Avec la plaque (c) -portant des bandes parallèles entre elles et au tube fluorescent- l'intensité lumineuse diffusée est plus homogène que celle obtenue avec la plaque (b).

Avec la plaque (d), on note une intensité lumineuse plus homogène que celle obtenue avec la plaque (c).

### EXEMPLES 4a et 4b comparatifs

A titre de comparaison, on mesure l'intensité lumineuse diffusée en fonction de la distance à la source lumineuse de panneaux formés d'Altuglas CN 100-10.000® (polyméthacrylate de méthyle coulé - PMMA - ne contenant pas de particules de polyamide). Ces panneaux sont montés dans un dispositif d'affichage lumineux comme décrit aux exemples 3b et 3c .

A l'exemple 4a, la plaque ou panneau d'Altuglas CN 100-10.000 porte un film adhésif continu identique à celui utilisé à l'exemple 3b.

A l'exemple 4b, la plaque porte un film adhésif sous forme de bandes parallèles identiques à celui utilisé à l'exemple 3c.

La mesure de l'intensité lumineuse diffusée à une distance de 15 cm et 30 cm de la source lumineuse donne les résultats suivants :

**TABLEAU 2**

| **Exemples** | **Intensité lumineuse (lux)** | |
|---|---|---|
| | **à 15 cm** | **à 30 cm** |
| 4a | 150 | 125 |
| 4b | 150 | 125 |
| 3b | 340 | 240 |
| 3c | 250 | 190 |

On peut noter que les plaques contenant des particules de polyamide selon l'invention présentent une intensité lumineuse diffusée plus élevée que celle obtenue avec une plaque de PMMA ne contenant pas de particules de polyamide.

## Revendications

1. Composition thermoplastique pour article façonné diffusant la lumière à base de matière thermoplastique transparente, **caractérisée en ce qu'**elle contient, par rapport à la composition totale, de 20 ppm à 1000 ppm de particules de polyamide de dimension moyenne comprise entre 0,4 µm et 200 µm.

2. Composition selon la revendication 1, **caractérisée en ce que** le matériau thermoplastique transparent est un (co)polymère (méth)acrylique, du polycarbonate, polystyrène, du polytéréphtalate d'éthylène ou un copolyester constitué par du polytéréphtalate d'éthylène modifié par un glycol ou un mélange du polytéréphtalate d'éthylène et du copolyester.

3. Composition selon la revendication 2, **caractérisée en ce qu'**elle comprend un (co)polymère thermoplastique (méth)acrylique, choisi parmi les polyméthacrylates d'alkyle et les copolymères de méthacrylate d'alkyle et d'au moins un monomère à insaturation(s) éthylénique(s) copolymérisable(s) avec le méthacrylate d'alkyle.

4. Composition conforme à la revendication 3, **caractérisée en ce que** le (co)polymère thermoplastique comprend de 70 à 100 % en poids de monomère principal, le méthacrylate d'alkyle et de 0 à 30 % en poids de monomère(s) à insaturation(s) éthylénique(s) copolymérisable(s) avec le méthacrylate d'alkyle.

5. Composition conforme à la revendication 4 **caractérisée en ce que** les monomères à insaturation(s) éthylénique(s) sont choisi(s) parmi les acrylates d'alkyle en C₁-C₈, le styrène, les styrènes substitués, l'acrylonitrile, le méthacrylonitrile, les méthacrylates d'alkyle en C₁-C₈ différents du monomère principal, les acrylates et méthacrylates d'hydroxyalkyle en C₁-C₄, les acrylates et méthacrylates d'alcoxy alkyle en C₁-C₄, ou d'aryloxyalkyle en C₁-C₄, l'acrylamide, le méthacrylamide, l'acide acrylique, l'acide méthacrylique, les maléimides et les diméthacrylates d'alkylène glycol dans lesquels le groupe alkylène a de 1 à 4 atomes de carbone.

6. Composition conforme à l'une des revendications 3 à 5, **caractérisée en ce que** le méthacrylate d'alkyle a de 1 à 8 atomes de carbone dans le groupe alkyle.

7. Composition conforme à à la revendication 6, **caractérisée en ce que** le méthacrylate d'alkyle est choisi dans le groupe formé par le méthacrylate de méthyle, d'éthyle, de propyle, d'isopropyle et de butyle.

8. Composition conforme à l'une des revendications 1 à 7, **caractérisée en ce que** les particules de polyamide sont de dimension moyenne comprise entre 0,4 µm et 100 µm, de préférence entre 0,4 et 50 µm.

9. Composition conforme à l'une des revendications 1 à 8, **caractérisée en ce qu'**elle comprend de 100 à 200 ppm de particules de polyamide.

10. Composition conforme à l'une des revendications 1 à 9, **caractérisée en ce qu'**elle comprend des particules de polyamide de distribution granulométrique étroite.

11. Composition conforme à l'une quelconque des revendications 1 à 10, **caractérisée en ce que** le polyamide est obtenu à partir d'un ou plusieurs lactames, d'un ou plusieurs aminoacides ou de mélanges de diamines et de diacides ou à partir d'un mélange de ces monomères.

12. Composition conforme à la revendication 11, **caractérisée en ce que** les lactames sont choisis parmi le ε-caprolactame, l'oenantholactame, l'undécanolactame, le lauryllactame.

13. Composition conforme à la revendication 11, **caractérisée en ce que** les aminoacides sont choisis parmi les aminoacides dont la chaîne carbonée contient 4 à 20 atomes de carbone, et de préférence parmi les acides aminocaproïque, amino-7-heptanoïque, amino-11-undécanoïque, amino-12-dodécanoïque.

14. Composition conforme à la revendication 11, **caractérisée en ce que** le polyamide dérive de la polycondensation d'hexaméthylènediamine, de dodécaneméthylènediamine, de métaxylylènediamine, de bis-(p-aminocyclohexyl)méthane et/ou de triméthylhexaméthylènediamine avec un ou plusieurs acides isophtalique, téréphtalique, adipique, subérique, azélaïque, sébacique, dodécanedioïque ou dodécanedicarboxylique.

15. Composition conforme à la revendication 11, **caractérisée en ce que** le polyamide est choisi dans le groupe formé par le polyamide 6, obtenu par polymérisation d'ε-caprolactame, le polyamide 11 obtenu par polycondensation de l'acide amino-11-undécanoïque, le polyamide 12 obtenu par polycondensation de l'acide amino-12-dodécanoïque ou le dodécanolactame, le polyamide 6,12 obtenu par polycondensation de l'hexaméthylènediamine avec l'acide 1,12-dodécanedioïque.

16. Article façonné diffusant la lumière formé à partir de la composition selon l'une des revendication 1 à 15, par moulage par extrusion, injection, compression ou coulée.

17. Article selon la revendication 16 façonné sous forme de plaques.

18. Article selon la revendication 17, comprenant une concentration en particules de polyamide variant dans toute l'épaisseur de l'article, la plus forte concentration se trouvant dans une zone proche de la surface de diffusion.

19. Article façonné diffusant la lumière comprenant un support en matériau thermoplastique transparent et une couche d'une composition selon l'une des revendication 1 à 15.

20. Article selon la revendication 19, dans lequel le support en matériau thermoplastique transparent est choisi parmi un (co)polymère (méth)acrylique, du polycarbonate, polystyrène, du polytéréphtalate d'éthylène ou un copolyester constitué par du polytéréphtalate d'éthylène modifié par un glycol ou un mélange du polytéréphtalate d'éthylène et du copolyester.

21. Article selon l'une des revendications 19 et 20, selon lequel il est obtenu par coextrusion ou plaxage.

22. Système d'affichage lumineux comprenant un panneau constitué par un article selon l'une des revendications 16 à 21 et au moins un moyen formant une source de lumière.

23. Système selon la revendication 22 comprenant au moins un moyen formant une source lumineuse allongée, monté pour éclairer le panneau par sa tranche.

24. Système d'affichage lumineux selon l'une des revendications 22 et 23 comprenant un panneau portant un film ou une plaque diffusant la lumière sur la face par laquelle on observe la lumière diffusée.

25. Système d'affichage lumineux selon l'une des revendications 22 à 24, comprenant un panneau portant un film ou une plaque opaque sur la face opposée à celle par laquelle on observe la lumière diffusée.

26. Système d'affichage lumineux selon l'une des revendications 24 et 25 selon lequel le film diffusant la lumière et/ou le film opaque se présente sous la forme de bandes adhésives parallèles, régulièrement espacées ou non les unes des autres.

27. Système conforme à la revendication 26, selon lequel le film se présente sous la forme de bandes adhésives parallèles entre elles et au(x) moyen(s) formant la ou les source(s) lumineuse(s) allongé(s) monté(s) pour éclairer le panneau par sa tranche.

## Patentansprüche

1. Thermoplastische Zusammensetzung für Formgegenstand, der Licht über ein transparentes thermoplastisches Material verstreut, **dadurch gekennzeichnet, dass** sie in Bezug auf die Gesamtzusammensetzung zwischen 20 ppm und 1000 ppm Polyamidteilchen mit einer mittleren Abmessung zwischen 0,4 µm und 200 µm enthält.

2. Zusammensetzung nach Anspruch 1, **dadurch gekennzeichnet, dass** das transparente thermoplastische Material ein (Meth)acryl-(Co)polymer, Polycarbonat, Polystyrol, Ethylenpolyterephthalat oder ein Copolyester, bestehend aus Ethylenpolyterephthalat, modifiziert durch ein Glycol oder ein Gemisch aus Ethylenpolyterephthalat und Copolyester, ist

3. Zusammensetzung nach Anspruch 2, **dadurch gekennzeichnet, dass** sie ein thermoplastisches (Meth)acryl-(Co)polymer enthält, ausgewählt unter den Alkylpolymethacrylaten und den Alkylmethacrylat-Copolymeren und mindestens einem Monomer mit Ethylen-Ungesättigtheit(en), die mit dem Alkylmethacrylat copolymerisierbar sind.

4. Zusammensetzung nach Anspruch 3, **dadurch gekennzeichnet, dass** das thermoplastische (Co)polymer zwischen 70 und 100 Gew.-% Hauptmonomer, das Alkylmethacrylat und zwischen 0 und 30 % Gew.-% Monomer (e) mit Ethylen-Ungesättigtheit(en), die mit dem Alkylmethacrylat copolymerisierbar sind, umfasst.

5. Zusammensetzung nach Anspruch 4, **dadurch gekennzeichnet, dass** die Monomere mit Ethylen-Ungesättigtheit(en) ausgewählt sind unter Alkylacrylaten in C₁-C₈, Styrol, substituierten Styrolen, Acrylnitril, Methacrylnitril, Alkylmethacrylaten in C₁-C₈, verschieden vom Hauptmonomer, Hydroxyalkylacrylaten und -methacrylaten in C₁-C₄, Alcoxyalkylacrylaten und -methacrylaten in C₁-C₄ oder Aryloxyalkyl in C₁-C₄, Acrylamid, Methacrylamid, Acrylsäure, Methacrylsäure, Alkylenglycolmaleimiden und -dimethacrylaten, in denen die Alkylengruppe 1 bis 4 Kohlenstoffatome umfasst.

6. Zusammensetzung nach einem der Ansprüche 3 bis 5, **dadurch gekennzeichnet, dass** das Alkylmethacrylat 1 bis 8 Kohlenstoffatome in der Alkylgruppe aufweist.

7. Zusammensetzung nach Anspruch 6, **dadurch gekennzeichnet, dass** das Alkylmethacrylat ausgewählt ist aus der Gruppe, gebildet durch Methyl-, Ethyl-, Propyl-, Isopropyl- und Butylmethacrylat.

8. Zusammensetzung nach einem der Ansprüche 1 bis 7, **dadurch gekennzeichnet, dass** die Polyamidteilchen eine mittlere Größe zwischen 0,4 µm und 100 µm, vorzugsweise zwischen 0,4 µm und 50 µm, aufweisen.

9. Zusammensetzung nach einem der Ansprüche 1 bis 8, **dadurch gekennzeichnet, dass** sie 100 bis 200 ppm Polyamidteilchen umfasst.

10. Zusammensetzung nach einem der Ansprüche 1 bis 9, **dadurch gekennzeichnet, dass** sie Polyamidteilchen von enger granulometrischer Verteilung umfasst.

11. Zusammensetzung nach einem der Ansprüche 1 bis 10, **dadurch gekennzeichnet, dass** das Polyamid aus einem oder mehreren Lactamen, einer oder mehreren Aminosäuren oder Gemischen aus Diaminen und Disäuren oder aus einem Gemisch dieser Monomere hergestellt ist.

12. Zusammensetzung nach Anspruch 11, **dadurch gekennzeichnet, dass** die Lactamen ausgewählt sind unter ε-Caprolactam, Oenantholactam, Undecanolactam, Lauryllactam.

13. Zusammensetzung nach Anspruch 11, **dadurch gekennzeichnet, dass** die Aminosäuren ausgewählt sind unter Aminosäuren, deren Kohlenstoffkette 4 bis 20 Kohlenstoffatome aufweist, und vorzugsweise unter Amincapron-, Amin-7-heptanon-, Amin-11-undecanon-, Amin-12-dodecanonsäuren.

14. Zusammensetzung nach Anspruch 11, **dadurch gekennzeichnet, dass** das Polyamid, aus der Polykondensation von Hexamethylendiamin, Dodecanmethyl-endiamin, Metaxylylendiamin, Bis-(p-aminocyclo-hexyl)methan und/oder Trimethylhexamethylendiamin mit einer oder mehreren Isophthal-, Terephthal-, Adipin-, Suberin-, Azelain-, Sebacin-, Dodecandion- oder Dodecandicarboxylsäuren hervorgegangen ist.

15. Zusammensetzung nach Anspruch 11, **dadurch gekennzeichnet, dass** das Polyamid ausgewählt ist aus der Gruppe, gebildet durch Polyamid 6, erhalten durch Polymerisation von ε-Caprolactam, Polyamid 11, erhalten durch Polykondensation von Amin-11-Undecansäure, Polyamid 12, erhalten durch Polykondensation von Amin-12-dodecansäure oder Dodecanlactam, Polyamid 6,12, erhalten durch Polykondensation von Hexamethylendiamin mit 1,12-Dodecandionsäure.

16. Licht streuender, geformter Gegenstand, gebildet aus der Zusammensetzung nach einem der Ansprüche 1 bis 15 durch Strangpressen, Einspritzen, Kompression oder Gießen.

17. Gegenstand nach Anspruch 16, geformt in der Form von Platten.

18. Gegenstand nach Anspruch 17, umfassend eine Konzentration von Polyamidteilchen, die in der ganzen Dicke des Gegenstands variiert, wobei die größte Konzentration sich in einer Zone in der Nähe der Streuoberfläche befindet.

19. Geformter, Licht streuender Gegenstand, umfassend einen Träger aus transparentem thermoplastischem Material und eine Schicht einer Zusammensetzung nach einem der Ansprüche 1 bis 15.

20. Gegenstand nach Anspruch 19, in welchem der Träger aus transparentem thermoplastischem Material ausgewählt ist unter einem (Meth)acryl-(Co)polymer, Polycarbonat, Polystyrol, Ethylenpolyterephthalat oder einem Copolyester, gebildet durch Ethylenpolyterephthalat, modifiziert durch ein Glycol oder ein Gemisch aus Ethylenpolyterephthalat und Copolyester.

21. Gegenstand nach einem der Ansprüche 19 und 20, nach dem dieser durch Coextrusion oder Acrylierung hergestellt ist.

22. Leuchtanzeigesystem, umfassend eine Tafel, gebildet durch einen Gegenstand nach einem der Ansprüche 16 bis 21 und mindestens einem Mittel, das eine Lichtquelle bildet.

23. System nach Anspruch 22, umfassend mindestens ein Mittel, das eine längliche Lichtquelle bildet, montiert um die Tafel durch ihre Scheibe zu beleuchten.

24. Leuchtanzeigesystem nach einem der Ansprüche 22 und 23, umfassend eine Tafel, die eine Folie oder eine Platte trägt, die Licht auf die Seite streut, durch die das Streulicht wahrgenommen wird.

25. Leuchtanzeigesystem nach einem der Ansprüche 22 bis 24, umfassend eine Tafel, die auf der Seite gegenüber jener, durch die das Streulicht wahrgenommen wird, eine Folie oder eine undurchsichtige Platte trägt.

26. Leuchtanzeigesystem nach einem der Ansprüche 24 und 25, nach dem die Folie, die das Licht streut, und/oder die undurchsichtige Folie in der Form von parallelen klebenden Bändern vorliegt, die zueinander einen regelmäßigen Abstand aufweisen oder nicht.

27. System nach Anspruch 26, nach dem die Folie in der Form von klebenden Bändern vorliegt, die zueinander und zu dem bzw. den Mittel(n), das bzw. die die längliche(n), zum Erleuchten der Tafel durch ihre Scheibe montierte(n) Leuchtquelle(n) bildet bzw. bilden, parallel sind.

## Claims

1. Thermoplastic composition for a light-scattering shaped article based on a transparent thermoplastic, **characterized in that** it contains, with respect to the total composition, from 20 ppm to 1000 ppm of polyamide particles of average size of between 0.4 µm and 200 µm.

2. Composition according to Claim 1, **characterized in that** the transparent thermoplastic material is a (meth)acrylic (co)polymer, polycarbonate, polystyrene, polyethylene terephthalate or a copolyester consisting of polyethylene terephthalate modified by a glycol or a blend of polyethylene terephthalate and of the copolyester.

3. Composition according to Claim 2, **characterized in that** it is composed of a (meth)acrylic thermoplastic (co)polymer, chosen from polyalkyl methacrylates and copolymers of an alkyl methacrylate and of at least one monomer having one or more ethylenically unsaturated groups which is (are) copolymerizable with the alkyl methacrylate.

4. Composition according to Claim 3, **characterized in that** the thermoplastic (co)polymer contains from 70 to 100% by weight of a main monomer, an alkyl methacrylate, and from 0 to 30% by weight of one or more monomers having one or more ethylenically unsaturated groups which is (are) copolymerizable with the alkyl methacrylate.

5. Composition according to Claim 4, **characterized in that** the monomers having one or more ethylenically unsaturated groups is (are) chosen from C₁-C₈ alkyl acrylates, styrene, substituted styrenes, acrylonitrile, methacrylonitrile, C₁-C₈ alkyl methacrylates differing from the main monomer, C₁-C₄ hydroxyalkyl acrylates and methacrylates, C₁-C₄ alkoxyalkyl or C₁-C₄ aryloxyalkyl acrylates and methacrylates, acrylamide, methacrylamide, acrylic acid, methacrylic acid, maleimides and alkylene glycol dimethacrylates in which the alkylene group has from 1 to 4 carbon atoms.

6. Composition according to one of Claims 3 to 5, **characterized in that** the alkyl methacrylate has from 1 to 8 carbon atoms in the alkyl group.

7. Composition according to Claim 6, **characterized in that** the alkyl methacrylate is chosen from the group formed by methyl methacrylate, ethyl methacrylate, propyl methacrylate, isopropyl methacrylate and butyl methacrylate.

8. Composition according to one of Claims 1 to 7, **characterized in that** the polyamide particles have an average size of between 0.4 µ and 100 µm, preferably between 0.4 and 50 µm.

9. Composition according to one of Claims 1 to 8, **characterized in that** it comprises from 100 to 200 ppm of polyamide particles.

10. Composition according to one of Claims 1 to 9, **characterized in that** it comprises polyamide particles having a narrow particle size distribution.

11. Composition according to any one of Claims 1 to 10, **characterized in that** the polyamide is obtained from one or more lactams, one or more amino acids or mixtures of diamines and of diacids or from a mixture of these monomers.

12. Composition according to Claim 11, **characterized in that** the lactams are chosen from ε-caprolactam, enantholactam, undecanolactam and lauryllactam.

13. Composition according to Claim 11, **characterized in that** the amino acids are chosen from amino acids whose carbon chain contains from 4 to 20 carbon atoms, and preferably from aminocaproic, 7-aminoheptanoic, 11-aminoundecanoic and 12-aminododecanoic acids.

14. Composition according to Claim 11, **characterized in that** the polyamide derives from the polycondensation of hexamethylenediamine, dodecane-methylenediamine, metaxylylenediamine, bis-(p-aminocyclohexyl)methane and/or trimethylhexamethylenediamine with one or more isophthalic, terephthalic, adipic, suberic, azelaic, sebacic, dodecanedioic or dodecanedicarboxylic acids.

15. Composition according to Claim 11, **characterized in that** the polyamide is chosen from the group formed by nylon-6, obtained by the polymerization of ε-caprolactam, nylon-11 obtained by the polycondensation of 11-aminoundecanoic acid, nylon-12 obtained by the polycondensation of 12-aminododecanoic acid or dodecanolactam, nylon-6,12 obtained by the polycondensation of hexamethylenediamine with 1,12-dodecanedioic acid.

16. Light-scattering shaped article formed from the composition according to one of Claims 1 to 15 by extrusion moulding, injection moulding, compression moulding or by casting.

17. Article according to Claim 16, shaped in the form of sheets.

18. Article according to Claim 17, comprising a concentration of polyamide particles varying over the entire thickness of the article, the highest concentration being in a region close to the scattering surface.

19. Light-scattering shaped article comprising a support made of a transparent thermoplastic material and a layer of a composition according to one of Claims 1 to 15.

20. Article according to Claim 19, in which the support made of transparent thermoplastic material is chosen from a (meth)acrylic (co)polymer, polycarbonate, polystyrene, polyethylene terephthalate or a copolyester consisting of polyethylene terephthalate modified by a glycol or a blend of polyethylene terephthalate and of the copolyester.

21. Article according to one of Claims 19 and 20, according to which it is obtained by coextrusion or coating or lamination.

22. Light-display system comprising a panel consisting of an article according to one of Claims 16 to 21 and at least one means forming a light source.

23. System according to Claim 22, comprising at least one means forming an elongate light source mounted in order to illuminate the panel via its edge.

24. Light-display system according to one of Claims 22 and 23, comprising a panel carrying a light-scattering film or sheet on the face via which the scattered light is observed.

25. Light-display system according to one of Claims 22 to 24, comprising a panel carrying an opaque film or sheet on the face opposite that via which the scattered light is observed.

26. Light-display system according to one of Claims 24 and 25, according to which the light-scattering film and/or the opaque film are/is in the form of parallel adhesive strips, which may or may not be uniformly spaced apart.

27. System according to Claim 26, according to which the film is in the form of adhesive strips which are parallel to each other and to the one or more means forming the elongate light source or sources mounted in order to illuminate the panel via its edge.
